# EUROPEAN PATENT SPECIFICATION

(11) **EP 3 226 680 B1**
(45) Date of publication and mention of the grant of the patent: **15.04.2020**
(21) Application number: 15823019.3
(22) Date of filing: 04.12.2015
(51) Int. Cl.: A01K 5/02

(54) **DEVICE FOR DISPENSING CONSUMER GOODS**
VORRICHTUNG ZUR AUSGABE VON KONSUMGÜTERN
DISPOSITIF DE DISTRIBUTION DE PRODUITS DE CONSOMMATION

(30) Priority: 04.12.2014 IT MO20140353
(43) Date of publication of application: 11.10.2017
(73) Proprietor: Fedeli, Benedetto, 98000 Monaco (MC)
(72) Inventor: Fedeli, Benedetto, 98000 Monaco (MC)
(74) Representative: Brunacci, Marco
(86) International application number: PCT/IB2015/059358
(87) International publication number: WO 2016/088092

(56) References cited:
- WO-A2-2011/110822
- GB-A- 2 199 477
- US-A- 5 377 620

## Description

### Technical Field

The present invention relates to a device for dispensing consumer goods, in particular liquid and/or pasty food products, dry food products, and other products such as medicines, etc.

### Background Art

The need is known to distribute different types of products with predetermined dosages and in an automatic way.

For example, in the case of the distribution of food to pets like dogs and cats, it might be necessary to provide the animal with predetermined doses of food in a programmed manner during a period of absence of the owner.

This occurs particularly when there is the need to take care of one's pet without the help of other people and without giving up the variance of food needed to keep the animal itself in good health.

Such a need also combines with that of a correct feeding of the animal, which, however, requires the use of foods rapidly degradable which, in case of a prolonged stay in the open environment, may give rise to unpleasant odors and to hygienic-health problems. Another example is the dispensing of food products of the liquid or paste type.

The document WO2011/110822 discloses an animal feeding device that includes a disposable feeding container having pre-filled food-containing compartments.

Document GB 2 199 477 A shows another animal feeding device in which a disposable platter with multiple compartments rotates to offer the food to the animal.

And document US 5 377 620 shows another feeder in which a carousel with two feeding troughs rotates to allow access of the animal to measured amounts of feed at predetermined time intervals.

In some sectors, such as fast food or self-service, but also home dining, there may be a need to control and program the dispensing of certain types of food, such as sauces, creams or condiments.

This need can be connected both to operational objectives, such as time saving, automation of production processes, etc., and to hygienic-health objectives, such as to avoid direct contact between manual operators and products intended to be eaten.

A further example concerns the dispensing of consumer goods such as medicines or the like.

Many people, in fact, require a periodic and dosed intake of these products. The need therefore arises to help consumers to control the quantities of medicines and the frequency with which they should be taken, the more so because most of these consumers are elder people and more prone to omissions and oversights.

### Description of the Invention

The main aim of the present invention is to provide a device for dispensing consumer goods that allows to dispense various types of consumer goods in a controlled manner.

One object of the present invention is to provide a device for dispensing consumer goods that permits a scheduled dispensing over time.

Another object of the present invention is to provide a device for dispensing consumer goods that ensures optimum hygienic-health conditions.

A further object of the present invention is to provide a device for dispensing consumer goods that allows to minimize waste.

Another object of the present invention is to provide a device for dispensing consumer goods that allows to overcome the mentioned drawbacks of the prior art within the ambit of a simple, rational, easy, effective to use and affordable solution.

The objects stated above are achieved by the present device for dispensing consumer goods having the characteristics of claim 1.

### Brief Description of the Drawings

Other characteristics and advantages of the present invention will become better evident from the description of four preferred, but not exclusive, embodiments of a device for dispensing consumer goods, illustrated by way of an indicative, but non-limiting, example in the accompanying drawings, wherein:
Figures 1 and 2 are axonometric views of a first embodiment of the device according to the invention;
Figure 3 is a view of a detail of a first embodiment of the device according to the invention;
Figure 4 is a sectional view of a first embodiment of the device according to the invention;
Figures 5 and 6 are views of details of a first embodiment of the device according to the invention in different configurations.
Figure 7 is an axonometric view of a detail of a third embodiment of the device according to the invention;
Figure 8 is an axonometric view of a detail of a third embodiment of the device according to the invention;
Figures 9 and 10 are axonometric exploded views of details of a third embodiment of the device according to the invention;
Figures 11 and 12 are schematic views of two different configurations of a third embodiment of the device according to the invention;
Figures 13 and 14 are axonometric views of details of a fourth embodiment of the device according to the invention.

### Embodiments of the Invention

With particular reference to such figures, reference number 1 globally indicates a device for dispensing consumer goods, in particular liquid and/or pasty food products, dry food products, and other products such as medicines, etc. According to the invention, the device 1 comprises a fixed bearing structure 9, a first portion 2 and a second portion 3 supported movable in rotation around a respective axis by the bearing structure itself.

In the present embodiments, the first and the second axis are mutually coincident and are identified in the figures by the reference number 4.

The first portion 2 is a support positioned at the base of the device 1 and has a plurality of collecting elements 5 spaced apart angularly from one another.

The collecting elements 5 are of the type of trays or bowls able to contain consumer goods of various types.

Alternative solutions cannot be ruled out wherein the collecting elements 5 are flat elements or containers of other type.

The second portion 3 is arranged above the first portion 2 and supports a plurality of pods 6 containing consumer goods and spaced apart angularly from one another.

In particular, the second portion 3 is a wheel-shaped frame with a central core 7 from which spokes branch off which subdivide the wheel itself into circular sectors.

Each circular sector supports a pod 6.

Alternative embodiments cannot be ruled out wherein, e.g., the second portion 3 is made up of a rotating support of different shape.

Both the first portion 2 and the second portion 3 are associated with a motor 8 able to make both rotate.

Conveniently, the motor 8 is of the type of an electric motor supplied by the power mains or by rechargeable batteries.

Different motors, e.g. combustion engines or of other type, cannot be ruled out. In the present embodiment there are eight pods 6.

The pods 6 are sealed elements containing predetermined quantities of consumer goods to be dispensed.

The bearing structure 9 defines at least one access area 10 secured to at least one of the collecting elements 5.

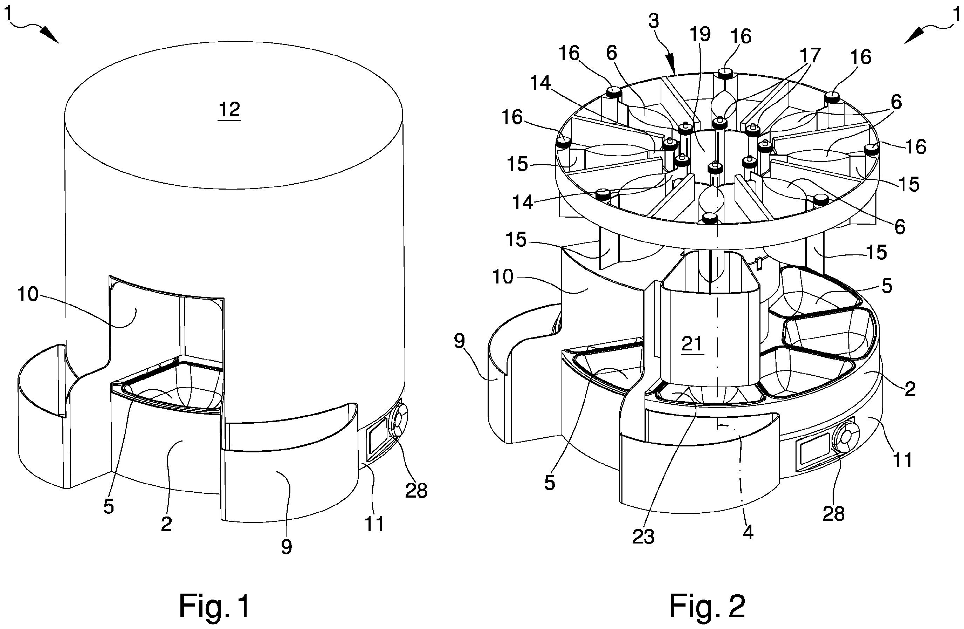

As illustrated in Figures 1 and 2, the access area 10 is defined on the bearing structure in such a way as to allow the user to access the collecting element 5 which is located at such access area. In particular, the access area is delimited by walls formed on the bearing structure 9 in such a way as to define a well-delimited concavity which extends inside of the device 1.

The bearing structure 9 also comprises one base 11 on which is placed, in a removable manner, a casing 12 able to contain all the parts of the device 1 and to isolate the internal contents from the external environment.

The casing 12 defines an opening that is arranged at the access area 10 so as to allow the positioning of the casing itself on the bearing structure 9.

Internally, the bearing structure 9 defines a chamber 13 containing the motor 8. In the present embodiment, the chamber 13 extends from the center of the base of the bearing structure 9.

Still according to the invention, the device comprises selective opening means 17, 18, 22, 101 of the pods 6 able to dispense the contents of the pods themselves within at least one of the collecting elements 5 at a predefined angular position 23.

In the present embodiment, the predefined position is placed upstream of the access area 10 with respect to the direction of rotation of the second portion 3. The opening means 17, 18, 22, 101 comprise, for at least one of the pods 6, a wrapping element 17 associated with a first portion 14 of the respective pod 6 and retaining means 16 associated with a second portion 15 of the pod itself.

In the embodiment shown in the figures, the opening means 17, 18, 22, 101 comprise a respective wrapping element 17 and respective retaining means 16 for each pod 6.

Preferably, the first and the second portion 14 and 15 of each pod 6 correspond to its opposite ends.

The wrapping element 17 is operable to apply a force on the pod 6 so as to move the first portion 14 away from the second portion 15 to make its contents available.

The retaining means 16, on the other hand, retain the pod 6 counteracting the aforementioned pulling action.

In the present embodiment the retaining means 16 are of the type of a gripper. Alternative solutions cannot be ruled out wherein the retaining means 16 are of the type of hooks, clips, etc.

Advantageously, the opening means 17, 18, 22, 101 have squeezing means 18 of the pod 6 placed between the wrapping elements 17 and the retaining means 16.

More in detail, the squeezing means 18 comprise a pair of squeezing elements 19 opposed and spaced apart from one another to define a passage slot 20 through which the pod is dragged due to the pulling action of the wrapping element 17.

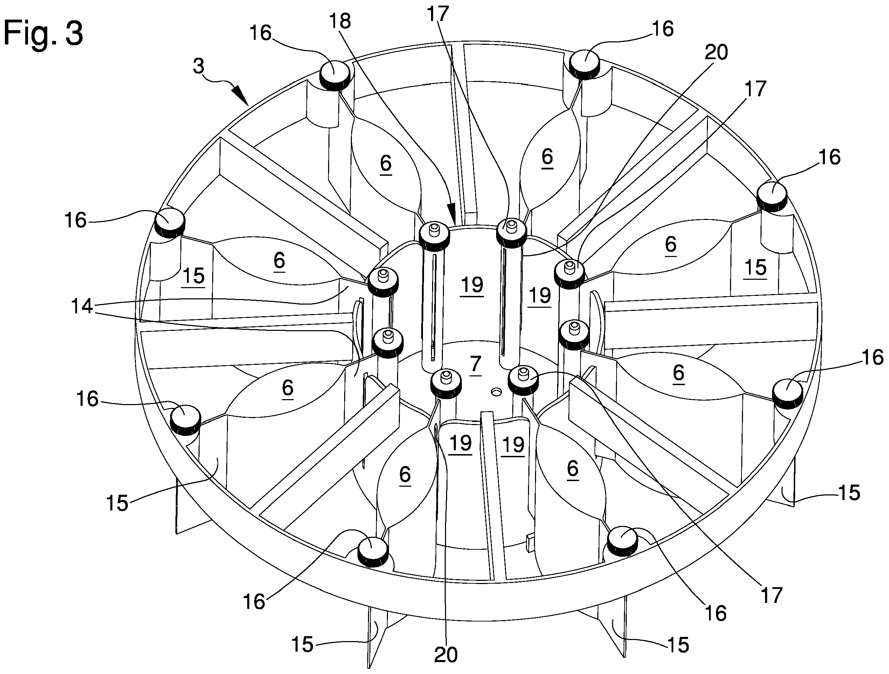

As illustrated in Figure 3, there is a pair of squeezing elements 19 for each pod 6 and all the pairs are arranged in the proximity of the edge of the inner central core 7 from which the spokes of the second portion 3 branch off.

Solutions cannot be ruled out wherein the squeezing means are made with other elements able to squeeze the pod 6 to empty its contents.

Advantageously, the bearing structure 9 comprises conveying means 21 of the contents of the pods 6 inside a respective collecting element 5.

In particular, the conveying means 21 are arranged below the pods 6 in the predefined position.

In the present embodiment, the conveying means 21 are made of a single through element positioned right above the collecting element 5 located in the predefined position.

The through element is formed by four walls defining a closed profile and is shaped substantially like a circular sector able to act as a funnel.

In the present embodiment, each wrapping element 17 is made up of a shaft rotating around a respective substantially vertical axis.

Each wrapping element 17 has a slit in which the first portion 2 of the pod is inserted and fastened.

The base of the wrapping elements 17 is associated with a respective gear 24 able to allow the activation of the rotation of the element itself.

The opening means 17, 18, 22, 101 comprise at least one control element 22 able to engage with the wrapping element 17 of each pod 6 when the latter reaches the predefined angular position 23.

The control element 22 is therefore able to operate the wrapping element 17 so as to cause the opening of the respective pod 6 and allow the dispensing of the product contained therein.

In the preferred embodiment shown in the figures, the wrapping elements 17 are movable in rotation around the respective axes and the control element 22 is therefore able to operate in rotation the wrapping element 17 which is positioned, from time to time, in the predefined angular position 23.

Conveniently, the control element 22 is kinematically connected to the motor 8. More in detail, the motor 8 supports in rotation a driving wheel 25 which engages with the control element 22.

Advantageously, the control element 22 is of the type of a first cogwheel 30 and has a first auxiliary wheel 31.

This engages with the driving wheel 25.

In particular, the first auxiliary wheel 31 is arranged below the first cogwheel 30.

Between the first wheel 30 and the first auxiliary wheel 31 are placed first activation means 32 able to solidarize the first wheel 30 to the first auxiliary wheel 31 when the driving wheel 25 rotates in a first direction and to release the first wheel 30 from the first auxiliary wheel 31 when the driving wheel 25 rotates in a second direction opposite the first.

In particular, the first wheel 30 and the first auxiliary wheel 31 rotate together and with the same rotation speed when the driving wheel 25 rotates in the above-mentioned first direction, while when the driving wheel 25 rotates in the above-mentioned second direction, only the first wheel 30 rotates and the first auxiliary wheel 31 remains stationary.

In the present embodiment, the first wheel 30 and the first auxiliary wheel 31 are supported in rotation by a first shaft 33, locked together with the first auxiliary wheel 31.

The first activation means 32 are able to solidarize the first wheel 30 to the first shaft 33 when the driving wheel 25 rotates in the first direction and to release the first wheel 30 from the first shaft 33 when the driving wheel 25 rotates in the second direction.

In particular, the first activation means 32 are of the type of a spring. This is inserted in a suitable seat formed inside of the first wheel 30 and of the first auxiliary wheel 31 and is wrapped around the first shaft 33.

The spring 32 is able to be compressed as a result of the rotation of the driving wheel 25 in the first direction and to expand as a result of the rotation of the driving wheel 25 in the second direction. In this way, when the driving wheel 25 rotates in the first direction, the spring 32 is compressed increasing the frictional force of the first wheel 30 on the shaft 33 so as to mutually solidarize them.

On the contrary, when the driving wheel 25 rotates in the second direction, the spring 32 expands decreasing the frictional force applied by the first wheel 30 on the shaft 33 so as to mutually release them.

The device 1 also comprises at least one second cogwheel 34 kinematically connected to the driving wheel 25 and able to engage with the second portion 3 to control the rotation thereof around the respective axis.

Similarly to what described above, there is also a second auxiliary wheel 35 which engages with the driving wheel 25.

In particular the second auxiliary wheel 35 is arranged below the second cogwheel 34.

Even in this case second activation means 36 are interposed able to solidarize the second wheel 34 to the second auxiliary wheel 35 when the driving wheel 25 rotates in the above-mentioned second direction, and to release the second wheel 34 from the second auxiliary wheel 35 when the driving wheel 25 rotates in the above-mentioned first direction.

The second wheel 34 and the second auxiliary wheel 35 are supported in rotation by a second shaft 37 locked together with the second auxiliary wheel itself.

More in detail, the second activation means 36 are able to solidarize the second wheel 34 to the second shaft 37 when the driving wheel 25 rotates in the second direction and to release the second wheel 34 from the second shaft 37 when the driving wheel 25 rotates in the first direction.

In particular, the second activation means 36 are of the type of a spring. This too is inserted in a suitable seat formed inside of the second wheel 34 and of the second auxiliary wheel 35 and is wrapped around the second shaft 37.

The spring 36 is able to be compressed as a result of the rotation of the driving wheel 25 in the second direction and to expand as a result of the rotation of the driving wheel 25 in the first direction.

Similarly to what seen before, when the driving wheel 25 rotates in the second direction, the spring 36 is compressed increasing the frictional force of the second wheel 34 on the shaft 37 so as to mutually solidarize them.

On the contrary, when the driving wheel 25 rotates in the first direction, the spring 36 expands decreasing the frictional force of the second wheel 34 on the shaft 37 so as to mutually release them.

Conveniently, there is a solenoid 27 able to control the reversal of motion of the driving wheel 25.

In this way it is possible to cyclically revert the motion of the driving wheel and therefore to alternate the advancement of the carrousel and the actuation in rotation of the wrapping element 17 which is located in the predefined position. Advantageously, the device 1 comprises timing means 28 that allow to activate the rotation of the first and of the second portion 2, 3 at preset time intervals.

In the present embodiment, in fact, the first portion 2 is rotatable independently of the second portion 3.

Alternative solutions cannot be ruled out wherein the first portion 2 is locked in rotation together with the second portion 3, with the pods 6 angularly aligned to a respective collecting element 5.

Conveniently, the timing means 28 are programmable electronic devices that control the activation of the motor 8 at preset time intervals.

Different solutions cannot be ruled out wherein, e.g., the timing means 28 are made mechanically, e.g. with spring rechargeable mechanical members, or in any case which can be activated mechanically and periodically.

In a second embodiment, not illustrated in the figures, the control element 22 is movable alternately between a rest configuration and a work configuration, in which it is able to engage with the wrapping element 17 that is located in the predefined position. In the rest configuration the control element 22 is free to rotate around its own axis, while in the work configuration it is able to drive in rotation the wrapping element 17 with which it engages.

More particularly, the control element 22 is vertically movable in translation between the rest configuration and the active one, whereby to each of these configurations corresponds a different height of the control element itself.

The device 1 comprises, therefore, movement means of the control element 22 between the rest configuration and the active configuration. The movement means are also operatively connected to the driving wheel 25.

The device 1 also comprises at least one second cogwheel, this too kinematically connected to the motor 8, which engages with the second portion 3 and, more particularly, with the central core 7. The second cogwheel is therefore able to control the rotation of the second portion 3 around the respective axis 4.

Preferably, when the driving wheel 25 rotates in a first direction, e.g. clockwise, the second cogwheel drives in rotation the second portion 3 and the movement means control the translation of the control element 22 moving it from the rest configuration to the active configuration and vice versa. When the driving wheel 25 rotates instead in a direction opposite to the first, i.e. counterclockwise, only the rotation occurs of the only control element 22, the second portion 3 remaining stationary in the respective angular position.

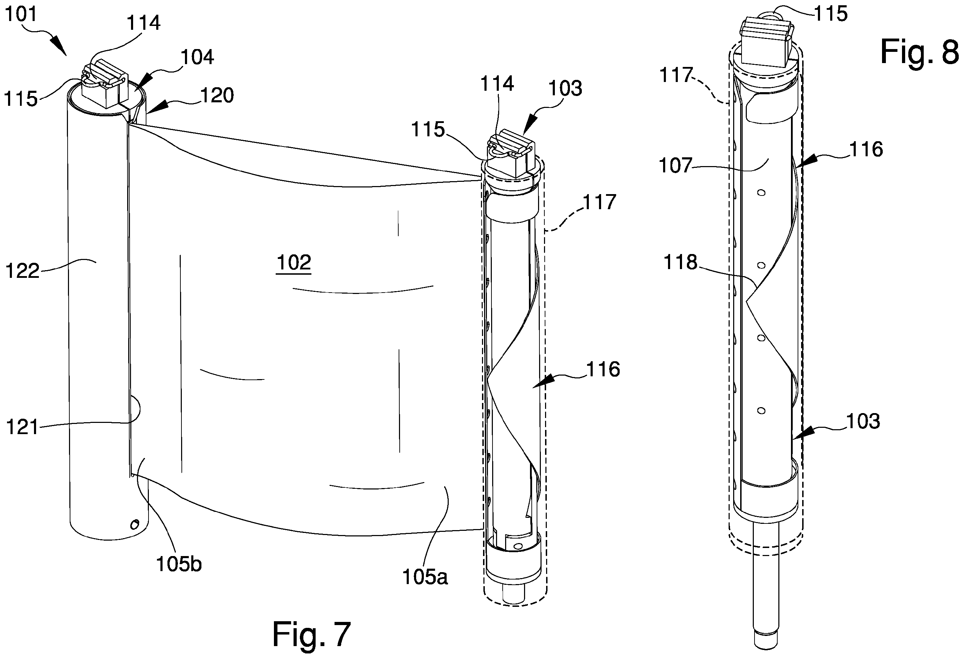

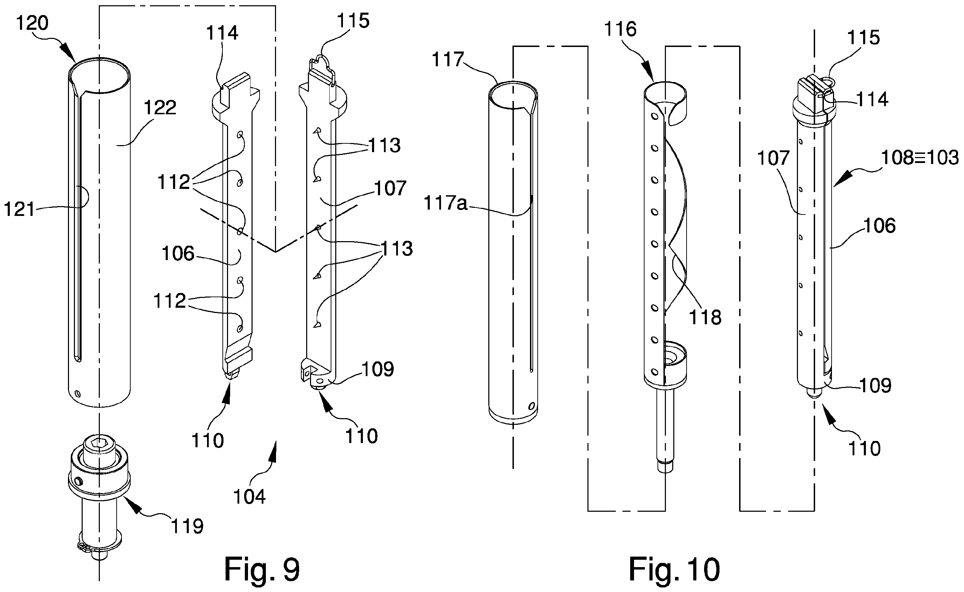

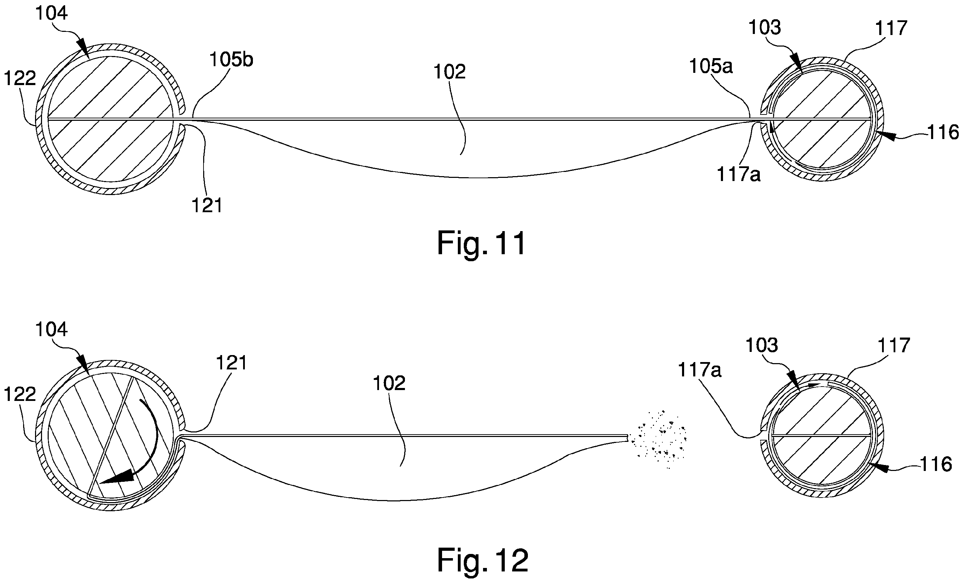

In a third embodiment, shown in Figures 7 to 12, the opening means 17, 18, 22, 101 are of the type of a device for the opening of pods or the like, indicated with the reference number 101.

As illustrated in Figure 1, the device 101 comprises retaining means 103, 104 able to keep a pod 102 taut which contains a product to be dispensed.

In the present embodiment, the retaining means 103, 104 comprise a first gripping element 103 and a second gripping element 104 able to retain a first end portion 105a and a second end portion 105b, respectively, of the pod 102 opposite to one another and hereinafter referred to as end portions 105. Advantageously, the first gripping element 103 comprises a matching portion 106 and an abutment portion 107 coupled to one another and able to grip on the first end portion 105a for keeping the pod 102 taut.

The second gripping element 104 also comprises a matching portion 106 and an abutment portion 107 coupled to one another, in this case able to grip on the second end portion 105b for keeping the pod 102 taut.

Alternative solutions cannot be ruled out wherein only one of the first gripping element 103 and the second gripping element 104 comprises the above described matching and abutment portions 106, 107, with the other gripping element comprising other retaining means for keeping the pod 102 taut, e.g., hooks, springs or clips.

The matching portions 106 and abutment portions 107 are two complementary elements which, once coupled, define an elongated cylindrical element 108. The cylindrical element 108 has a base 109 with attachment means 110 to a support plane 111 intended to support the device 101.

In the present embodiment, the support plane 111 is horizontal, but solutions cannot be ruled out wherein this plane is positioned differently, e.g. vertically. With reference to the embodiment illustrated in Figures 7 to 12, the device 101 comprises fastening means 112, 113, 114, 115 able to keep the matching portion 106 coupled to the abutment portion 107.

In particular, the fastening means 112, 113, 114, 115 comprise interlocking holes 112, formed on the matching portion 106, and protruding bodies 113, formed on the abutment portion 107 and able to provide an interlocking coupling with the respective interlocking holes 112.

The alternative solution cannot be ruled out wherein the interlocking holes 112 are formed on the abutment portion 107 and the protruding bodies 113 are formed on the matching portion 106.

A mixed solution cannot also be ruled out wherein the interlocking holes 112 and the protruding bodies 113 are formed both on the matching portion 106 and on the abutment portion 107.

In any case, the interlocking coupling between a protruding body 113 and the respective hole 112 allows the retention of the end portions 105 of the pod 102, the latter being interposed between the matching and abutment portions 106, 107.

Conveniently, the fastening means 112, 113, 114, 115 also comprise a fastening seat 114 and a fastening element 115.

The fastening seat 114 is formed onto at least one of the matching portion 106 and the abutment portion 107, while the fastening element 115 is associated with the other of the matching portion 106 and the abutment portion 107.

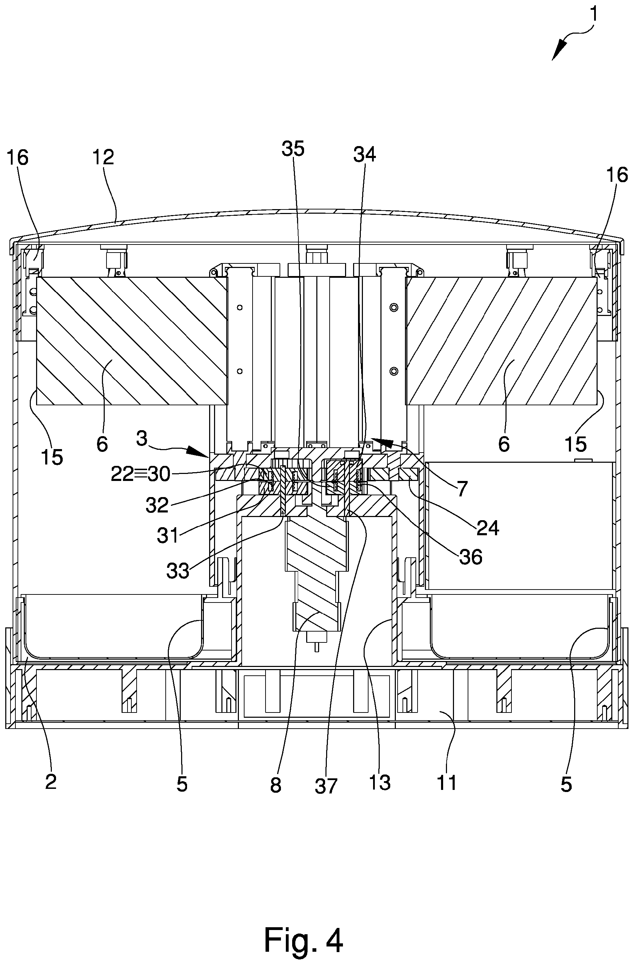

The fastening element 115 is movable between a release position (Figure 3), wherein it is released from the fastening seat 114, and a fastening position (Figure 4), wherein it is engaged in the fastening seat 114 for the retention of the matching and abutment portions 106, 107.

This solution ensures an even firmer grip on the end portions 105 of the pod 102.

In this way, to the retention force of the above-described interlocking coupling, is added the retention force applied by the fastening element 115 engaged in the fastening seat 114, improving the grip on the pod 102.

In the third embodiment, the fastening seat 114 and the fastening element 115 are placed on top of the matching portion 106 and of the abutment portion 107 respectively, but their different positioning cannot be ruled out.

The fastening element 115 is of the type of a handle hinged to the head of the abutment portion 107, while the fastening seat 114 is of the type of a groove formed on the head of the matching portion 106 and arranged laterally from the opposite side of the handle.

In the release position, the handle 115 is raised.

In the fastening position, the handle 115 is rotated towards the fastening seat 114 and engages in the groove to ensure the coupling between the matching portion 106 and the abutment portion 107.

According to the invention, the device comprises a cutting element 116 able to cut the pod kept taut by the retaining means 103, 104.

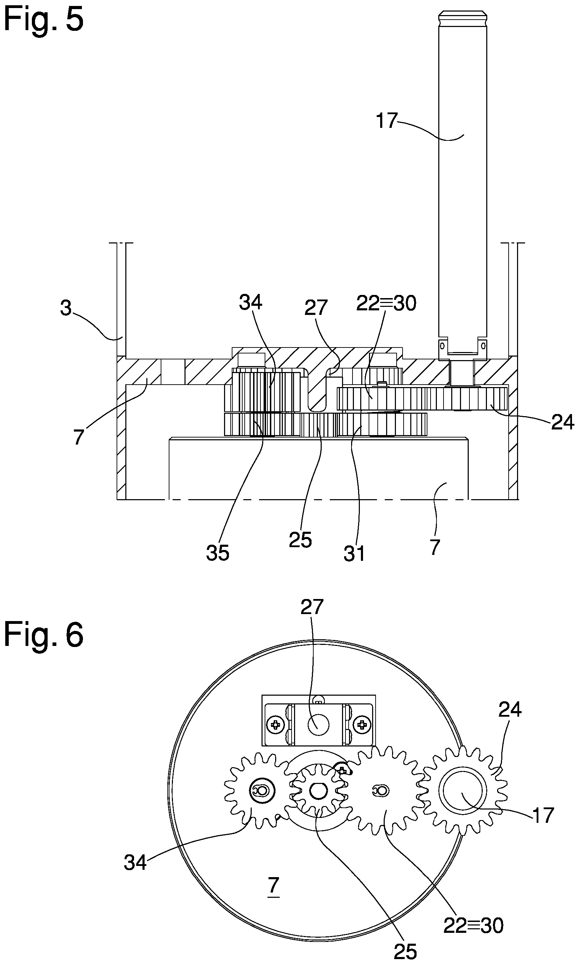

The cutting element 116 can be activated between a passive configuration (figure 5), wherein it is spaced apart from the pod 102, and an active configuration (Figure 6), wherein it interacts with the pod 102 to cause its break by cutting.

In particular, the cutting element 116, moving from the passive configuration to the active one, passes at least partially through the first end portion 105a of the pod 102 kept taut, and cuts it.

The cutting element 116 is associated with the first gripping element 103 and is movable with respect thereto to move from the passive configuration to the active configuration.

In addition, the cutting element 116 is inserted in a cylindrical casing 117 secured to the support plane and able to cover the cutting element itself.

The cylindrical casing 117 has a slot opening 117a able to allow the passage of the first end portion 105a of the pod 102 through the casing itself. Advantageously, the cutting element surrounds at least partially the first gripping element 103 and is operable in rotation with respect to it to move from the passive configuration to the active configuration.

In the third embodiment, the cutting element 116 comprises a base end 109 operatively connected to the motor means able to operate the cutting element itself in rotation.

Conveniently, the cutting element 116 comprises an end cutting edge 118 able to come in contact with the pod 102 when the cutting element itself moves from the passive configuration to the active configuration.

Preferably, the end cutting edge 118 is substantially pointed, so as to concentrate the cutting action onto a single point of the pod 102, facilitating the opening thereof.

As illustrated in the figures, the cutting element 116 is a foil that wraps the first gripping element 103 and has an end cutting edge 118 shaped as a curled triangle.

Different solutions cannot be ruled out wherein, e.g., the cutting element 116 is of the type of a blade inclined with respect to the vertical, or wherein the end cutting edge 118 has several points (zig-zag pattern), or wherein there are several cutting elements 116 associated with a single first gripping element 103. Conveniently, the second gripping element 104 is operable in rotation, when the pod 102 is cut, for the rolling-up of the pod itself around it.

The rotation occurs around the axis of the gripping element 104.

In this way, the open pod (Figure 6) is wrapped around the cylindrical element 108 formed by the matching and abutment portions 106, 107 of the second gripping element 104.

In particular, the base 109 of the second gripping element 104 is associated, by means of the attachment means 110, with a connecting pin 119 inserted into the support plane 111 and rotatable in the same plane.

The connecting pin 119, in fact, is operatively connected to motor means, not illustrated in the figures for the sake of simplicity, able to actuate in rotation the same pin and, therefore, the second gripping element 104.

This solution allows the second gripping element 104 to rotate on itself while remaining positioned in the support plane.

Different solutions cannot be ruled out wherein, e.g., the second gripping element 104 is connected directly to the motor means, or wherein there is a motion transmission system able to connect the second gripping element 104 to other motor means.

Advantageously, the second gripping element 104 is associated with squeezing means 120 of the pod 102.

The squeezing means 120 have at least one through slot 121 able to squeeze the pod when the second gripping element 104 is in rotation.

In particular, the squeezing means 120 comprise a fixed sleeve 122, at least partially surrounding the second gripping element 104 and having the slot 121. Different solutions are not ruled out wherein, e.g. there are two opposite walls defining the slot 121, or two tubular elements arranged side by side to one another to define the slot 121, or other similar solutions.

As illustrated in the figures, the second end portion 105b of the pod 102 passes through the slot 121.

When the second gripping element 104 wraps the pod 102 cut, the latter passes forcibly through the slot 121.

The dimensions of the slot 121 are such to cause a progressive crushing of the pod 102, facilitating the escape of the contents from the pod itself.

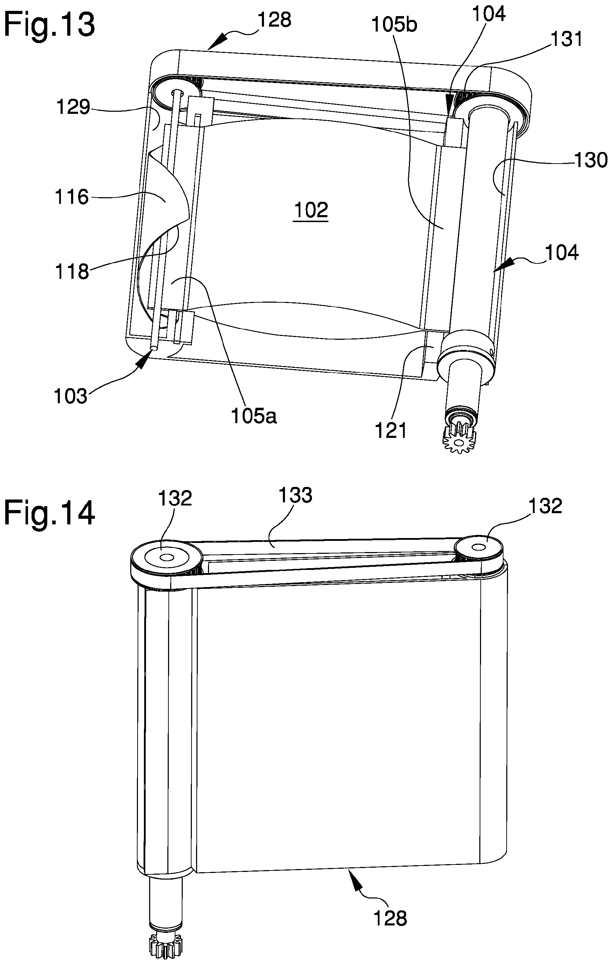

In a fourth embodiment, illustrated in Figures 13 and 14, the device 101 comprises a substantially rigid connecting support 128 and having a first housing seat 129 and a second housing seat 130 able to position said first gripping element 103 and said second gripping element 104, respectively at a predefined distance the one from the other.

As illustrated in the figures, the connecting support 128 is box-shaped, i.e. it is a rigid casing which delimits a space where a pod 102 can be inserted.

The support 128 is associated in a removable manner with a support plane 111, i.e. it can be installed and uninstalled in the plane itself for the engagement or the disengagement of the pod 102.

In this way, the interchangeability of pods appears to be facilitated.

The first housing seat 129 and the second housing seat 130 are advantageously positioned at the opposite ends of the connecting support.

In particular, the position of the seats 129, 130 is such as to ensure a predefined distance between the gripping elements 103 and 104 which is the distance sufficient to tension the pod 102.

Conveniently, in the device 101 shown in the second embodiment, the connecting support 128 comprises the squeezing means 120.

In particular, the second housing seat 130 is delimited by two opposite walls 131 defining the slot 121.

The second end portion 105b of the pod 102, similarly to the first embodiment described, passes through the slot 121.

Furthermore, in the second embodiment, the first gripping element 103 is associated with the cutting element 116 to form a single cutting body able to retain the first end portion 105a and operable in rotation on itself for the break by cutting of the pod 102.

In this case, therefore, the end 105a is not inserted between a matching portion and an abutment one, but it is directly inserted into the cutting body.

With reference to Figure 8, in this second embodiment the gripping elements 103, 104 are kinematically connected by means of a motion transmission system 132, 133.

The latter is of the type of two pulleys 132 associated with respective gripping elements 103, 104 and one belt 133 able to kinematically connect the pulleys themselves.

This solution allows to co-ordinate the setting in rotation of the gripping elements 103, 104.

Different solutions are not ruled out wherein, e.g., different motion transmission systems are used such as cogwheel and shaft assemblies, or wherein the gripping elements 103, 104 are released from one another.

Alternative embodiments cannot be ruled out wherein the device 1 has opening means 17, 18, 22, 101 which comprise an integration of all the solutions illustrated in the embodiments described above.

The operation of the present invention is as follows.

In the first embodiment, shown in Figures 1 to 6, the pods 6 are loaded into the device 1 by inserting the first portion 2 and the second portion 3 in the wrapping element 17 and in the retaining means 16 respectively.

Depending on the preset time interval through the timing means 28, the motor 8 is activated and deactivated thus determining both the movement of the cogwheels and the movement of the first portion 2 around the axis 4.

In particular, the driving wheel 25 initially rotates according to the first direction described above.

In this way the second wheel 34 rotates locked together with the second auxiliary wheel 35 and drives the second portion 3 in the rotary motion.

The rotation proceeds by an eighth of a turn until the solenoid 27 induces the motion reversal.

At this point the driving wheel 25 rotates in the second direction, opposite the first, and the second wheel 34 is released from the second auxiliary wheel 35.

The first wheel 30, on the other hand, solidarizes to the first auxiliary wheel 31, and drives the wrapping element 17 in the rotary motion.

The wrapping element 17, by rotating, pulls the pod 6 associated close to itself, and applies a pulling action on it. To this pulling action counteracts the resistant force applied by the retaining means 16. The latter, by retaining the second end portion 15, apply a force opposite to that applied by the wrapping element 17. The action of the two opposing forces determines the breaking of the pod 6 and therefore the emptying thereof. The content is conveyed into the respective collecting element 5 by means of the conveying means 21.

In the meantime, the wrapping element 17 continues to wrap the pod 6 making it pass through the squeezing means 18.

In this way the whole consumer product contained in the pod 6 is forced to escape and to be conveyed in the collecting element 5 which is located in the predefined position.

As soon as the first portion 2 rotates, the collecting element 5 with the consumer product moves to the access area 10, so as to be consumed.

At this point the solenoid 27 causes a new change in the direction of motion of the driving wheel 25, thus beginning a new cycle, in which a new pod 6 moves to the predefined position.

The above-described operations are repeated as soon as the two portions 2, 3 rotate, thus determining a controlled dispensing of the products contained in the pods 6.

In the second embodiment, not illustrated in the figures, the operation is similar to that described above, but the control element 22 is movable alternately between a rest configuration and a work configuration.

In the third and fourth embodiment, illustrated in Figures 7 to 14, the operation of the device 1 is similar to that of the first embodiment, except for the opening means 17, 18, 22, 101 which, in this case, are of the type of a device 101.

The operation of the device 101 in the third embodiment is the following.

The end portions 105 of the pod 102 are placed between the matching portions 106 and the abutment portions 107 of each gripping element 103, 104.

The first gripping element 103 and the second gripping element 104, with the pod 102 so retained, are placed on the support plane 111 at a distance so as to tension the pod itself.

In particular, the first gripping element 103 is inserted into the cylindrical casing 117 and, through the attachment means 110, secured onto the support plane 111.

More particularly, the first gripping element 103 is inserted into the cutting element 116 so that the latter wraps it at least partially.

The second gripping element 104, on the other hand, is inserted into the sleeve 122, with the second end portion 105b that passes through the slot 121, and, through the attachment means 110, secured to the connecting pin 119.

By activating the motor means, the cutting element 116 is made to rotate, moving from the rest configuration to the active configuration (Figures 5 and 6). The end cutting edge 118, in the above rotation, intercepts the pod 102 and strikes it causing it to break.

The curled triangular shape allows, then, the progressive cut of the pod as the cutting element 116 continues its rotation, until the pod itself is completely opened.

Once opened, the second gripping element 104 is set in rotation.

Such rotation allows the wrapping of the pod 102 around the second gripping element 104.

In this way, the pod 102 is forced to pass through the slot 121 undergoing, due to the rigidity of the sleeve 122, a crushing that facilitates the escape of the product contained therein.

The operation of the device 101 in the fourth embodiment is similar to that described in the third embodiment, with some differences that relate to the insertion of the pod 102 and the set in rotation of the second gripping element 104.

In this case, in fact, the pod 102 is first inserted into the connecting support 128 and then the support 128 together with the pod 102 are positioned on the support plane 111 and connected to the motor means.

The motor means actuate in rotation the cutting body defined by the first gripping element 103 and by the cutting element 116.

The motion transmission system 132, 133 allows to transfer the motion from the first gripping element 103 to the second gripping element 104, by actuating the latter in rotation.

It has in practice been found how the described invention achieves the proposed objects and in particular the fact is underlined that it allows to dispense various types of consumer goods in a controlled manner.

In fact, through the special means of opening and use of pre-packaged pods, the device allows the controlled dispensing of consumer goods of various kind, without any particular limitations.

These opening means can also be used for household appliances or other machinery designed to prepare dishes of various kind.

Moreover it is underlined that the device, thanks to the timing means and to the combination of the latter with the motor and the control element, allows a programmed dispensing over time.

In addition, it is emphasized that the present invention allows to optimize the hygienic-health conditions thanks to the casing which hermetically separates the inner contents of the device from the external environment.

In this way, any unpleasant odor resulting from the opening of pods containing wet products or the like are confined within the device.

The device provided, finally, allows to minimize waste because, thanks to the particular squeezing means, the quantity of product remaining in the pods is minimized, since this is squeezed out by the squeezing elements.

The cutting element so devised, in fact, allows to open the pod in a clear and precise manner, facilitating the correct dispensing of the product and the correct operation of the device itself.

The particular shape of the end cutting edge and the rotary movement, combined with the tensioning of the pod by the gripping elements, not only ensure a clear and precise opening, but also a quick and efficient cutting action of the pod itself.

The device thus provided can also be used for different types of machines and in different fields, both domestic and industrial.

The device provided, finally, has measures able to ensure high standards of quality and safety.

The casing indicated with the number 117, e.g., prevents any direct contact with the cutting element, thus protecting the user from accidental injury.

In addition, the positioning of the pod can be made easily, by engaging and disengaging the gripping elements, without having to carry, therefore, the hands in the proximity of the cutting elements.

## Claims

1. Device (1) for dispensing consumer goods **characterized by** the fact that it comprises:
- a fixed bearing structure (9);
- a first portion (2) supported movable in rotation around a respective axis (4) by said bearing structure (9) and having a plurality of collecting elements (5) spaced apart angularly from one another, said bearing structure (9) defining at least a fixed access area (10) to at least one of said collecting elements (5);
- a second portion (3) supported movable in rotation around a respective axis (4) by said bearing structure (9), arranged above said first portion (2) and supporting a plurality of pods (6) containing consumer goods and spaced apart angularly from one another;
- selective opening means (17, 18, 22, 101) of said pods (6) able to dispense the contents of the pods themselves within at least one of said collecting elements (5) at a predefined angular position (23).

2. Device (1) according to claim 1, **characterized by** the fact that said predefined angular position (23) is placed upstream of said access area (10) with respect to the direction of rotation of said second portion (3).

3. Device (1) according to one or more of the preceding claims, **characterized by** the fact that said opening means (17, 18, 22, 101) comprise:
- at least a wrapping element (17) associated with a first portion (14) of one of said pods (6);
- retaining means (16) associated with a second portion (15) of said pod (6); said wrapping element (17) being operable to apply a force on said pod (6) so as to move said first portion (14) away from said second portion (15) to make its contents available.

4. Device (1) according to one or more of the preceding claims, **characterized by** the fact that said opening means (17, 18, 22, 101) comprise squeezing means (18) of said pod (6) interposed between said wrapping elements (17) and said retaining means (16).

5. Device (1) according to claim 4, **characterized by** the fact that said squeezing means (18) comprise at least a pair of squeezing elements (19) mutually opposite and spaced apart to define a passage slot (20) through which said pod (6) is dragged due to the pulling action of said wrapping element (17).

6. Device (1) according to claim 4 or 5, **characterized by** the fact that said opening means (17, 18, 22, 101) comprise at least a control element (22) able to engage with said wrapping element (17) in said predefined position, said control element (22) being able to operate said wrapping element (17).

7. Device (1) according to one or more of the preceding claims, **characterized by** the fact that said wrapping element (17) is movable in rotation around a respective axis and that said control element (22) is able to operate in rotation said wrapping element (17) in said predefined angular position (23).

8. Device (1) according to claim 7, **characterized by** the fact that it comprises at least a motor (8) supporting at least a driving wheel (25) kinematically connected to said control element (22).

9. Device (1) according to claim 8, **characterized by** the fact that said control element is of the type of a first cogwheel (30) and by the fact that it comprises at least a first auxiliary wheel (31) which engages with said driving wheel (25), between said first wheel (30) and said first auxiliary wheel (31) first activation means (32) being interposed able to solidarize said first wheel (30) to said first auxiliary wheel (31) when said driving wheel (25) rotates in a first direction and to release said first wheel (30) from said first auxiliary wheel (31) when said driving wheel (25) rotates in a second direction opposite the first.

10. Device (1) according to one or more of the claims from 7 to 9, **characterized by** the fact that said first wheel (30) and said first auxiliary wheel (31) are supported in rotation by a first shaft (33) and by the fact that said first activation means (32) are able to solidarize said first wheel (30) to said first shaft (33) when said driving wheel (25) rotates in the first direction and to release said first wheel (30) from said first shaft (33) when said driving wheel (25) rotates in the second direction.

11. Device (1) according to claim 10, **characterized by** the fact that said first activation means (32) are of the type of a spring able to be compressed as a result of the rotation of said driving wheel (25) in said first direction and to expand as a result of the rotation of said driving wheel (25) in said second direction.

12. Device (1) according to claim 10 or 11, **characterized by** the fact that it comprises at least a second cogwheel (34) kinematically connected to said driving wheel (25) and able to engage with said second portion (3) to control the rotation thereof around its axis.

13. Device (1) according to one or more of the claims from 10 to 12, **characterized by** the fact that it comprises at least a second auxiliary wheel (35) which engages with said driving wheel (25), between said second wheel (34) and said second auxiliary wheel (35), second activation means (36) being interposed able to solidarize said second wheel (34) to said second auxiliary wheel (35) when said driving wheel (25) rotates in said second direction and to release said second wheel (34) from said second auxiliary wheel (35) when said driving wheel (25) rotates in said first direction.

14. Device (1) according to claim 13, **characterized by** the fact that said second wheel (34) and said second auxiliary wheel (35) are supported in rotation by a second shaft (37) and by the fact that said second activation means (36) are able to solidarize said second wheel (34) to said second shaft (37) when said driving wheel (25) rotates in said second direction and to release said second wheel (34) from said second shaft (37) when said driving wheel (25) rotates in said first direction.

15. Device (1) according to claim 14, **characterized by** the fact that said second activation means (36) are of the type of a spring able to be compressed as a result of the rotation of said driving wheel (25) in said second direction and to expand as a result of the rotation of said driving wheel (25) in said first direction.

## Patentansprüche

1. Vorrichtung (1) zur Ausgabe von Konsumgütern, umfassend
- eine festgelegte Tragstruktur (9);
- einen ersten Teil (2), der durch die Tragstruktur (9) um eine entsprechende Achse (4) drehbar gelagert ist und eine Vielzahl von winklig voneinander beabstandeten Sammelelementen (5) aufweist, wobei die Tragstruktur (9) mindestens einen festgelegten Zugangsbereich (10) zu mindestens einem der Sammelelemente (5) definiert;
**dadurch gekennzeichnet, dass** sie ferner umfasst
- einen zweiten Teil (3), der durch die Tragstruktur (9) um eine entsprechende Achse (4) drehbar gelagert ist, oberhalb des ersten Teils (2) angeordnet ist und eine Vielzahl von Hüllen (6) trägt, die Konsumgüter enthalten und winklig voneinander beabstandet sind;
- selektive Öffnungsmittel (17, 18, 22, 101) der Hüllen (6), die in der Lage sind, den Inhalt der Hüllen selbst innerhalb mindestens eines der Sammelelemente (5) in einer vorbestimmten Winkelposition (23) abzugeben.

2. Vorrichtung (1) nach Anspruch 1, **dadurch gekennzeichnet, dass** die vordefinierte Winkelposition (23) bezüglich der Drehrichtung des zweiten Teils (3) vor dem Zugangsbereich (10) angeordnet ist.

3. Vorrichtung (1) nach einem oder mehreren der vorstehenden Ansprüche, **dadurch gekennzeichnet, dass** die Öffnungsmittel (17, 18, 22, 101) umfassen:
- mindestens ein Wickelelement (17), das mit einem ersten Teil (14) einer der Hüllen (6) verbunden ist;
- Haltemittel (16), die mit einem zweiten Teil (15) der Hülle (6) verbunden sind; wobei das Wickelelement (17) betätigt werden kann, um eine Kraft auf die Hülle (6) auszuüben, so dass der erste Teil (14) von dem zweiten Teil (15) wegbewegt wird, um deren Inhalt verfügbar zu machen.

4. Vorrichtung (1) nach Anspruch 3, **dadurch gekennzeichnet, dass** die Öffnungsmittel (17, 18, 22, 101) Quetschmittel (18) der Hülle (6) umfassen, die zwischen den Wickelelementen (17) und den Haltemitteln (16) angeordnet sind.

5. Vorrichtung (1) nach Anspruch 4, **dadurch gekennzeichnet, dass** die Quetschmittel (18) mindestens ein Paar Quetschelemente (19) umfassen, die einander gegenüberliegen und voneinander beabstandet sind, um einen Durchgangsschlitz (20) zu definieren, durch den die Hülle (6) aufgrund der Zugwirkung des Wickelelements (17) gezogen wird.

6. Vorrichtung (1) nach Anspruch 4 oder 5, **dadurch gekennzeichnet, dass** die Öffnungsmittel (17, 18, 22, 101) mindestens ein Steuerelement (22) umfassen, das in der Lage ist, mit dem Wickelelement (17) in der vordefinierten Position in Eingriff zu kommen, wobei das Steuerelement (22) in der Lage ist, das Wickelelement (17) zu betätigen.

7. Vorrichtung (1) nach Anspruch 6, **dadurch gekennzeichnet, dass** das Wickelelement (17) um eine entsprechende Achse drehbar ist und dass das Steuerelement (22) in der Lage ist, in Rotation das Wickelelement (17) in der vordefinierten Winkelposition (23) zu betätigen.

8. Vorrichtung (1) nach Anspruch 7, **dadurch gekennzeichnet, dass** sie mindestens einen Motor (8) umfasst, der mindestens ein Antriebsrad (25) trägt, das kinematisch mit dem Steuerelement (22) verbunden ist.

9. Vorrichtung (1) nach Anspruch 8, **dadurch gekennzeichnet, dass** das Steuerelement von der Art eines ersten Zahnrades (30) ist und dass es mindestens ein erstes Hilfsrad (31) aufweist, das mit dem Antriebsrad (25) in Eingriff steht, wobei zwischen dem ersten Rad (30) und dem ersten Hilfsrad (31) erste Aktivierungsmittel (32) angeordnet sind, die in der Lage sind, das erste Rad (30) mit dem ersten Hilfsrad (31) zusammen zu bringen, wenn sich das Antriebsrad (25) in einer ersten Richtung dreht, und das erste Rad (30) von dem ersten Hilfsrad (31) zu lösen, wenn sich das Antriebsrad (25) in einer zweiten Richtung entgegengesetzt der ersten dreht.

10. Vorrichtung (1) nach Anspruch 9, **dadurch gekennzeichnet, dass** das erste Rad (30) und das erste Hilfsrad (31) durch eine erste Welle (33) drehbar gelagert sind und dass die ersten Aktivierungsmittel (32) in der Lage sind, das erste Rad (30) mit der ersten Welle (33) zusammen zu bringen, wenn sich das Antriebsrad (25) in der ersten Richtung dreht, und das erste Rad (30) von der ersten Welle (33) zu lösen, wenn sich das Antriebsrad (25) in der zweiten Richtung dreht.

11. Vorrichtung (1) nach Anspruch 10, **dadurch gekennzeichnet, dass** die ersten Aktivierungsmittel (32) von der Art einer Feder sind, die als Ergebnis der Drehung des Antriebsrades (25) in der ersten Richtung zusammengedrückt werden kann und sich als Ergebnis der Drehung des Antriebsrades (25) in der zweiten Richtung ausdehnen kann.

12. Vorrichtung (1) nach Anspruch 10 oder 11, **dadurch gekennzeichnet, dass** sie mindestens ein zweites Zahnrad (34) umfasst, das kinematisch mit dem Antriebsrad (25) verbunden und in der Lage ist, mit dem zweiten Teil (3) in Eingriff zu kommen, um dessen Drehung um seine Achse zu steuern.

13. Vorrichtung (1) nach Anspruch 12, **dadurch gekennzeichnet, dass** sie mindestens ein zweites Hilfsrad (35) umfasst, das mit dem Antriebsrad (25) zwischen dem zweiten Rad (34) und dem zweiten Hilfsrad (35) in Eingriff steht, wobei zweite Aktivierungsmittel (36) zwischengeschaltet sind, die in der Lage sind, das zweite Rad (34) mit dem zweiten Hilfsrad (35) zusammen zu bringen, wenn sich das Antriebsrad (25) in die zweite Richtung dreht, und das zweite Rad (34) von dem zweiten Hilfsrad (35) zu lösen, wenn sich das Antriebsrad (25) in die erste Richtung dreht.

14. Vorrichtung (1) nach Anspruch 13, **dadurch gekennzeichnet, dass** das zweite Rad (34) und das zweite Hilfsrad (35) durch eine zweite Welle (37) drehbar gelagert sind und dass die zweiten Aktivierungsmittel (36) in der Lage sind, das zweite Rad (34) mit der zweiten Welle (37) zusammen zu bringen, wenn sich das Antriebsrad (25) in die zweite Richtung dreht, und das zweite Rad (34) von der zweiten Welle (37) zu lösen, wenn sich das Antriebsrad (25) in die erste Richtung dreht.

15. Vorrichtung (1) nach Anspruch 14, **dadurch gekennzeichnet, dass** die zweiten Aktivierungsmittel (36) von der Art einer Feder sind, die als Ergebnis der Drehung des Antriebsrades (25) in der zweiten Richtung zusammengedrückt werden kann und sich als Ergebnis der Drehung des Antriebsrades (25) in der ersten Richtung ausdehnen kann.

## Revendications

1. Dispositif (1) pour distribuer des biens de consommation comprenant :
- une structure porteuse (9) fixe ;
- une première portion (2) supportée mobile en rotation autour d'un axe respectif (4) par ladite structure porteuse (9) et ayant une pluralité d'éléments de collecte (5) espacés angulairement les uns des autres, ladite structure porteuse (9) définissant au moins une zone d'accès (10) fixe à au moins l'un desdits éléments de collecte (5) ; **caractérisé en ce qu'**il comprend en outre
- une seconde portion (3) supportée mobile en rotation autour d'un axe respectif (4) par ladite structure porteuse (9), agencée au-dessus de ladite première portion (2) et supportant une pluralité de capsules (6) contenant des biens de consommation et espacées angulairement les unes des autres ;
- des moyens d'ouverture (17, 18, 22, 101) sélective desdites capsules (6) capables de distribuer le contenu des capsules elles-mêmes au sein d'au moins l'un desdits éléments de collecte (5) à une position angulaire prédéfinie (23).

2. Dispositif (1) selon la revendication 1, **caractérisé par le fait que** ladite position angulaire prédéfinie (23) est placée en amont de ladite zone d'accès (10) vis-à-vis de la direction de rotation de ladite seconde portion (3).

3. Dispositif (1) selon une ou plusieurs des revendications précédentes, **caractérisé par le fait que** lesdits moyens d'ouverture (17, 18, 22, 101) comprennent :
- au moins un élément d'enveloppement (17) associé à une première portion (14) d'une desdites capsules (6) ;
- des moyens de retenue (16) associés à une seconde portion (15) de ladite capsule (6) ;
ledit élément d'enveloppement (17) pouvant fonctionner pour appliquer une force sur ladite capsule (6) de façon à éloigner ladite première portion (14) de ladite seconde portion (15) pour rendre son contenu disponible.

4. Dispositif (1) selon la revendication 3, **caractérisé par le fait que** lesdits moyens d'ouverture (17, 18, 22, 101) comprennent des moyens de compression (18) de ladite capsule (6) interposés entre lesdits éléments d'enveloppement (17) et lesdits moyens de retenue (16).

5. Dispositif (1) selon la revendication 4, **caractérisé par le fait que** lesdits moyens de compression (18) comprennent au moins une paire d'éléments de compression (19) mutuellement opposés et espacés pour définir une fente de passage (20) à travers laquelle ladite capsule (6) est traînée en raison de l'action de traction dudit élément d'enveloppement (17).

6. Dispositif (1) selon la revendication 4 ou 5, **caractérisé par le fait que** lesdits moyens d'ouverture (17, 18, 22, 101) comprennent au moins un élément de commande (22) capable de venir en prise avec ledit élément d'enveloppement (17) dans ladite position prédéfinie, ledit élément de commande (22) étant capable de faire fonctionner ledit élément d'enveloppement (17).

7. Dispositif (1) selon la revendication 6, **caractérisé par le fait que** ledit élément d'enveloppement (17) est mobile en rotation autour d'un axe respectif et que ledit élément de commande (22) est capable de faire fonctionner en rotation ledit élément d'enveloppement (17) dans ladite position angulaire prédéfinie (23).

8. Dispositif (1) selon la revendication 7, **caractérisé par le fait qu'**il comprend au moins un moteur (8) supportant au moins une roue d'entraînement (25) raccordée de manière cinématique audit élément de commande (22).

9. Dispositif (1) selon la revendication 8, **caractérisé par le fait que** ledit élément de commande est du type d'un premier pignon (30) et **par le fait qu'**il comprend au moins une première roue auxiliaire (31) qui vient en prise avec ladite roue d'entraînement (25), entre ladite première roue (30) et ladite première roue auxiliaire (31) des premiers moyens d'activation (32) étant interposés capables de solidariser ladite première roue (30) à ladite première roue auxiliaire (31) lorsque ladite roue d'entraînement (25) tourne dans une première direction et pour libérer ladite première roue (30) de ladite première roue auxiliaire (31) lorsque ladite roue d'entraînement (25) tourne dans une seconde direction opposée à la première.

10. Dispositif (1) selon la revendication 9, **caractérisé par le fait que** ladite première roue (30) et ladite première roue auxiliaire (31) sont supportées en rotation par un premier arbre (33) et **par le fait que** lesdits premiers moyens d'activation (32) sont capables de solidariser ladite première roue (30) audit premier arbre (33) lorsque ladite roue d'entraînement (25) tourne dans la première direction et de libérer ladite première roue (30) dudit premier arbre (33) lorsque ladite roue d'entraînement (25) tourne dans la seconde direction.

11. Dispositif (1) selon la revendication 10, **caractérisé par le fait que** lesdits premiers moyens d'activation (32) sont du type d'un ressort capable d'être comprimé par suite de la rotation de ladite roue d'entraînement (25) dans ladite première direction et de s'étendre par suite de la rotation de ladite roue d'entraînement (25) dans ladite seconde direction.

12. Dispositif (1) selon la revendication 10 ou 11, **caractérisé par le fait qu'**il comprend au moins un second pignon (34) raccordé de manière cinématique à ladite roue d'entraînement (25) et capable de venir en prise avec ladite seconde portion (3) pour commander sa rotation autour de son axe.

13. Dispositif (1) selon la revendication 12, **caractérisé par le fait qu'**il comprend au moins une seconde roue auxiliaire (35) qui vient en prise avec ladite roue d'entraînement (25), entre ladite seconde roue (34) et ladite seconde roue auxiliaire (35), des seconds moyens d'activation (36) étant interposés capables de solidariser ladite seconde roue (34) à ladite seconde roue auxiliaire (35) lorsque ladite roue d'entraînement (25) tourne dans ladite seconde direction et de libérer ladite seconde roue (34) de ladite seconde roue auxiliaire (35) lorsque ladite roue d'entraînement (25) tourne dans ladite première direction.

14. Dispositif (1) selon la revendication 13, **caractérisé par le fait que** ladite seconde roue (34) et ladite seconde roue auxiliaire (35) sont supportées en rotation par un second arbre (37) et **par le fait que** lesdits seconds moyens d'activation (36) sont capables de solidariser ladite seconde roue (34) audit second arbre (37) lorsque ladite roue d'entraînement (25) tourne dans ladite seconde direction et de libérer ladite seconde roue (34) dudit second arbre (37) lorsque ladite roue d'entraînement (25) tourne dans ladite première direction.

15. Dispositif (1) selon la revendication 14, **caractérisé par le fait que** lesdits seconds moyens d'activation (36) sont du type d'un ressort capable d'être comprimé par suite de la rotation de ladite roue d'entraînement (25) dans ladite seconde direction et de s'étendre par suite de la rotation de ladite roue d'entraînement (25) dans ladite première direction.
